# EUROPÄISCHE PATENTSCHRIFT

(11) **EP 4 617 145 B1**
(45) Veröffentlichungstag und Bekanntmachung des Hinweises auf die Patenterteilung: **28.10.2026**
(21) Anmeldenummer: 25160502.8
(22) Anmeldetag: 27.02.2025
(51) Int. Cl.: B62B 3/10, B62B 5/04, B62B 5/06, B62B 3/12

(54) **HANDWAGEN ZUM TRANSPORT UND/ODER WICKELN VON MINDESTENS EINEM SCHLAUCH EINER MOBILEN HOCHWASSERSCHUTZANLAGE**
TROLLEY FOR TRANSPORTING AND/OR WINDING AT LEAST ONE HOSE OF A MOBILE FLOOD PROTECTION INSTALLATION
CHARIOT POUR LE TRANSPORT ET/OU L'ENROULEMENT D'AU MOINS UN TUYAU FLEXIBLE D'UN SYSTÈME MOBILE DE PROTECTION CONTRE LES INONDATIONS

(30) Priorität: 15.03.2024 DE 102024107525
(43) Veröffentlichungstag der Anmeldung: 17.09.2025
(73) Patentinhaber: Mobildeich GmbH, 22391 Hamburg (DE)
(72) Erfinder: Wagenhuber, Walter, 22391 Hamburg (DE)
(74) Vertreter: Weidner Stern Jeschke

(56) Entgegenhaltungen:
- DE-A1- 2 127 723
- DE-A1- 4 201 012
- FR-B1- 2 782 490
- US-A- 5 868 407

## Beschreibung

Die Erfindung betrifft einen Handwagen zum Transport und/oder Wickeln von mindestens einem Schlauch einer mobilen Hochwasserschutzanlage, wobei der Handwagen ein Rahmengestell, mindestens ein erstes Rad rollbar verbunden an dem Rahmengestell, eine Deichsel mit einer Kippachse zum Kippen der zwischen einer Aufrechtstellung und einer Absenkstellung beweglichen Deichsel und mit einem Handgriff zum Ziehen, Schieben und/oder Lenken des Handwagens und optional einen Wickelkern zum Wickeln des mindestens einen Schlauches aufweist, wobei die Deichsel über eine vertikale Drehachse drehbar mit dem Rahmengestell verbunden ist und mindestens eine Bremseinheit an und/oder in dem Rahmengestellt angeordnet ist und mittels eines ersten Bremsgestänges zum Ansteuern der drehbaren Deichsel verbunden ist.

Handwagen werden in verschiedenen Anwendungen eingesetzt, um ein Wickelgut, wie Feuerwehrschläuche, Schläuche für Ölsperren, in der Landwirtschaft oder für andere technische Zwecke, zu transportieren und/oder vor Ort im Einsatz auszurollen und/oder wieder auf dem Handwagen, beispielsweise mittels eines Wickelkerns, aufzurollen. Hierbei wird der Handwagen mittels einer Deichsel von einem Benutzer gezogen, geschoben und/oder gelenkt. Bei bekannten Handwagen dreht sich zum Lenken des Handwagens üblicherweise die Deichsel mit den Lenkrädern. Dementsprechend wirkt eine Bremse bei bekannten Handwagen nach dem Stand der Technik auf mindestens ein Lenkrad, welches fest mit der Deichsel verbunden ist.

Vor allem beim Ausbringen und Einholen von Schläuchen zum Erstellen einer mobilen Hochwasserschutzanlage ist es erforderlich, dass der Schlauch schnell, geradlinig oder in gewünschter Linie und stramm auf einem Untergrund ausgerollt und/oder wieder aufgewickelt wird, wofür ein häufiges, kontinuierliches und/oder gezieltes Bremsen des Handwagens notwendig ist. Diese Anforderungen lassen sich nicht vollständig mit der üblicherweise eingesetzten Handbremse bei Handwagen nach dem Stand der Technik realisieren.

Zudem kann es vor allem bei den breiteren Flachschläuchen von mobilen Hochwasserschutz- oder Deichanlagen vorkommen, dass die einzelnen Schlauchlagen nicht deckungsgleich übereinander beim Aufwickeln zum Liegen kommen oder nicht deckungsgleich aufgewickelt wurden, sodass sowohl beim Aufwickeln als auch beim Abwickeln gegebenenfalls eine manuelle Korrektur der Ausrichtung des jeweiligen Schlauchabschnittes erfolgen muss und somit der Wickelvorgang kurzzeitig unterbrochen und der Handwagen gebremst werden muss.

Neben Handbremsen zum Auslösen des Bremsvorgangs sind grundsätzlich auch Fußbremsen bei Handwagen bekannt. Beide Bremsbetätiger haben den Nachteil, dass der Benutzer eine gezielte, separate Bewegung zur Betätigung der Bremse neben dem eigentlichen Bewegen des Handwagens ausführen muss.

Die DE 42 01 012 A1 offenbart einen Gabelhubwagen mit einer Deichsel zum Betätigen einer Feststellbremse, wobei die Deichsel mit einem Grundkörper verbunden ist, welcher mittels seines Lenkzapfens eines senkrecht über einer Achse eines Laufrades bewegbaren Hubkolbens relativ zum Hubrahmen drehbar ist. Die Deichsel weist eine Rolle auf, an welcher eine kurvenförmige Angriffsfläche eines Hebels gleitet. Bei Bewegen der Deichsel in horizontaler Richtung in eine Fahrstellung wird der Hebel derart bewegt, dass dieser über eine Stange bei Überwindung einer Federkraft einer Feder einen Hebel der Bremseinheit nach oben zieht, wodurch sich die Bremsbacken von dem Laufrad lösen. Wird die Deichsel wieder in die vertikale Stellung geschwenkt, wird der Hebel durch die Feder zurück in die Bremsstellung bewegt. Die Feststellbremse kann zusätzlich bei senkrechter Stellung der Deichsel mittels eines Handgriffes gelöst werden, welcher ein in einer Hülse geführtes Seil zum Überwindung der Feder bewegt.

EP 4 039 560 A1 betrifft einen Palettentraganhänger, bei welchem ein Fahrwerkteil mit einer Deichsel und ein Ladeflächenteil über ein Gelenk und einen Arretierbolzen aneinandergekoppelt sind. Hierbei kann die Deichsel als Hebel verwendet werden, um den Ladeflächenteil abzusenken oder anzuheben. Des Weiteren weist der Palettentraganhänger eine konventionelle Hinterradbremsen sowie eine Vorderradbremse zum Verhindern eines Auflaufens des Palettentraganhängers auf ein Zugfahrzeug auf.

DE 10 2008 015 505 A1 beschreibt ein Flurförderzeug mit einer Deichsel, welche um eine horizontale Drehachse an einem Antriebsteil gelagert ist. Konzentrisch zur Drehachse ist eine Nockenscheibe angeordnet, welche mit der Deichsel drehfest verbunden ist und mittels welcher eine Bremsbetätigungseinrichtung einer Bremseinrichtung betätigbar ist. Das Flurförderzeug kann durch Drehen der Deichsel um eine vertikale Achse gelenkt werden.

DE 10 2008 015 504 A1 betrifft ebenfalls ein deichselgeführtes Flurförderzeug mit einer in Abhängigkeit von einer Stellung einer Deichsel betätigbaren Bremseinrichtung, welche mittels einer als Bowdenzug ausgebildeten Seilzugeinrichtung betätigbar ist.

DE 21 27 723 A beschreibt einen Gabelhubwagen, bei welchem eine Bremsbacke der Lenkräder mittels einer Hubwagendeichsel als Fahrbremse und mittels eines Fußhebels als Feststellbremse betätigbar ist.

Des Weiteren betrifft die DE 20 2004 004 973 U1 einen Transportwagen bestehend aus einem Untergestell mit daran befestigten Laufrollen, welche im Ruhestand des Transportwagens mittels Fußbremsen oder Verschwenken einer Deichsel festgesetzt werden können. Die DE 20 2020 106 558 U1 betrifft ein Transportgerät mit einen Transportbehälter zur Aufnahme von Gegenständen und einem an dem Transportbehälter zwischen einer Fahrposition und einer Standposition um eine erste Schwenkachse verschwenkbar angeordnetes Fahrwerk mit wenigstens zwei Laufrädern. DE 10 2008 012 626 A1 beschreibt einen Handhubwagen mit Hubgabeln, Laufrädern und einem Hubmechanismus, wobei eine Sicherheitseinrichtung vorgesehen ist, welche bei senkrecht stehender Deichsel eine Bewegung eines Laufrades in Zugrichtung verhindert. DE 199 389 A betrifft eine Bremse für Fahrzeuge aller Art, bei welcher durch Zurückschieben einer Stange beim Zurückhalten der Zugtiere die Bremsklötze angezogen werden.

Des Weiteren offenbaren auch die FR 2 782 490 B1 und die US 5,868,407 Handwägen mit einer Deichsel und einer Bremseinheit.

Aufgabe der Erfindung ist es, den Stand der Technik zu verbessern.

Gelöst wird die Aufgabe durch einen Handwagen gemäß Anspruch 1. Offenbart wird demnach ein Handwagen zum Transport und/oder Wickeln von mindestens einem Schlauch einer mobilen Hochwasserschutzanlage, wobei der Handwagen ein Rahmengestell, mindestens ein erstes Rad rollbar verbunden an dem Rahmengestellt, eine Deichsel mit einer Kippachse zum Kippen der zwischen einer Aufrechtstellung und einer Absenkstellung beweglichen Deichsel und mit einem Handgriff zum Ziehen, Schieben und/oder Lenken des Handwagens und optional einen Wickelkern zum Wickeln des mindestens einen Schlauches aufweist, wobei die Deichsel über eine vertikale Drehachse drehbar mit dem Rahmengestell verbunden ist und mindestens eine Bremseinheit an und/oder in dem Rahmengestell angeordnet ist und mittels eines ersten Bremsgestänges zum Ansteuern verbunden ist, wobei ein Ansteuerhebelelement beweglich an dem Rahmengestell angeordnet und mit dem ersten Bremsgestänge wirktechnisch verbunden ist, und das Ansteuerhebelelement mit einem Ende eines Zugelementes verbunden ist und ein an der Deichsel angeordnetes Exzenterelement an einem gegenüberliegenden Ende des Zugelementes verbunden ist, und das Zugelement drehbar im Wesentlichen in der Drehachse der Deichsel ist, sodass bei der Aufrechtstellung der Deichsel an der Kippachse das Exzenterelement nach unten gegen das Zugelement drückt und das Ansteuerhebelelement und das mindestens erste Bremsgestänge entlastet und die Bremseinheit an dem ersten Rad anliegt und bei der Absenkstellung der Deichsel an der Kippachse das Exzenterelement das Zugelement und das Ansteuerhebelelement nach oben zieht, das erste Bremsgestänge gespannt und die Bremseinheit vom ersten Rad getrennt ist.

Somit wird ein Handwagen zum Transport und/oder Wickeln von mindestens einem Schlauch einer mobilen Hochwasserschutzanlage bereitgestellt, bei welchem die Deichsel selbst als Bremsbetätigungshebel ausgebildet ist. Folglich ist der Bremsvorgang in einfacher Weise durch den Benutzer auslösbar, indem der Benutzer die Deichsel am Handgriff nach oben zieht und somit in die Aufrechtstellung an der Kippachse bringt, wodurch die Bremseinheit an dem Rad anliegt. Ebenso braucht der Benutzer zum Lösen der Bremseinheit die Deichsel lediglich am Handgriff nach unten in die Absenkstellung zu bewegen. Folglich ist es besonders vorteilhaft, dass der Benutzer seine Hand beim Betätigen der Bremseinheit am Handgriff der Deichsel belassen und den Bremsvorgang direkt über Einstellen der jeweiligen Stellung der Deichsel steuern kann. Dadurch kann der Benutzer sowohl den Bremsvorgang kontrollieren als auch gleichzeitig durch Ziehen, Schieben und/oder Lenken am Handgriff den Handwagen bewegen.

Dadurch ist ein Schlauch lagegenau, stramm und gezielt mittels des Handwagens ausbringbar und wieder auf einen Wickelkern des Handwagens aufnehmbar. Es ist besonders vorteilhaft, dass aufgrund der Ausbildung der Deichsel direkt als auslösender Bremshebel der Benutzer gerade nicht eine separate Bewegung zum Betätigen der Bremse, wie bei Handhebeln oder Fußbremsen nach dem Stand der Technik, durchführen muss und somit auch nicht von der eigentlichen Bewegung des Handwagens beim Ziehen, Schieben und/oder Lenken abgelenkt wird.

Somit wird gezielt die jeweilige Stellung der Deichsel genutzt, um effektiv und schnell den Handwagen zu bremsen und/oder die Bremseinheit zu lösen.

Es ist besonders vorteilhaft, dass neben einem gezielt eingeleiteten diskontinuierlichen oder kontinuierlichen Bremsen aufgrund der Ausbildung des Deichsel und des Bremsgestänges auch ein schlagartiges, sofortiges Bremsen ermöglicht ist, indem der Benutzer die Deichsel loslässt und diese nach oben in die Aufrechtstellung federt, wodurch der Handwagen gebremst wird. Dadurch ist der Handwagen im Notfall, oder falls ein sofortiges anderes Eingreifen des Benutzers, wie beispielsweise das Ausrichten eines verklemmten Schlauches, notwendig ist, sofort durch Loslassen des Handgriffes der Deichsel ohne weitere Maßnahmen durch den Benutzer gebremst. Folglich kann der Benutzer sofort seine Hand vom Handgriff lösen, sich auf die dadurch verursachte Bremsung verlassen und sich von dem Handwagen entfernen, um eine notwendige andere Tätigkeit durchzuführen.

Ein wesentlicher Gedanke der Erfindung beruht darauf, die Deichsel des Handwagens selbst als Betätigungshebel und zum Ansteuern der Bremseinheit über das Exzenterelement, das Zugelement, das Ansteuerhebelelement und das mindestens eine Bremsgestänge zu nutzen und durch Anordnen des Zugelementes in der Drehachse der Deichsel das Rad oder die Räder am Handwagen zu bremsen, welche nicht fest mit der Deichsel verbunden ist oder sind und/oder nicht zum Lenken verwendet wird oder werden. Dabei steuert die bewegbare und/oder drehbare Deichsel über das Zugelement den am sich nicht drehenden Rahmengestell beweglich angeordneten Ansteuerhebel an, welcher über das mindestens erste Bremsgestänge mit der ersten Bremseinheit wirktechnisch verbunden ist. Durch Bewegen der Deichsel zwischen der Aufrechtstellung und der Absenkstellung wird zum einen das Zugelement mittels des Exzenterelementes auf und ab bewegt und zum anderen dreht sich das Zugelement im Wesentlichen in der Drehachse der Deichsel beim Lenken der Deichsel und somit beim Schwenken in horizontaler Richtung. Es ist besonders vorteilhaft, dass hierbei das Ansteuerhebelelement und das Rahmengestell selbst gerade nicht drehend ausgebildet sind und das Ansteuerhebelelement sich lediglich auf und ab bewegt, unabhängig davon, in welcher horizontalen Drehstellung und/oder vertikalen Kippstellung die Deichsel sich befindet. Dadurch ist das Rad oder sind die Räder am Handwagen bremsbar, welche nicht mit der Lenkdeichsel verbunden sind.

### Folgendes Begriffliche sei erläutert:

Ein "Handwagen" ist insbesondere ein unmotorisiertes Gefährt, mit welchem ein Fußgänger den Handwagen und/oder eine Last auf dem Handwagen durch Zug oder Schub transportieren kann. Bei einem Handwagen kann es sich insbesondere um einen Hand-Rollwagen oder einen Hand-Hubwagen handeln, wobei ein Hand-Hubwagen insbesondere wie ein Paletten-Hubwagen ausgebildet sein kann. Der Handwagen ist insbesondere von einer einzigen Person bedienbar. Der Handwagen ist insbesondere derart ausgebildet, dass mindestens ein Schlauch einer mobilen Hochwasserschutzanlage als Last auf dem Handwagen transportierbar und/oder vom Handwagen mittels eines Wickelkerns abwickelbar und somit ausbringbar und/oder aufwickelbar und somit einholbar ist. Der Handwagen weist insbesondere ein Rahmengestell und/oder eine Ladefläche auf. Der Handwagen weist insbesondere mindestens ein erstes Rad und/oder ein weiteres Rad auf, welches nicht von der Deichsel gelenkt wird. Bei Anordnung nur eines Rades ist das Rad insbesondere gegenüberliegend zur Deichsel am Rahmengestell angeordnet. Ebenso können gegenüberliegend zur Deichsel zwei oder mehr Räder beabstandet zueinander, beispielsweise links- und rechtsseitig, angeordnet sein. Zusätzlich kann ein Lenkrad oder können mehrere Lenkräder unterhalb der Deichsel, insbesondere verbunden mit der Drehachse der Deichsel, angeordnet sein. Der Handwagen kann insbesondere einen Wickelkern oder mehrere Wickelkerne und/oder eine Aufwickelhilfe und/oder mehrere Aufwickelhilfen aufweisen. Somit können insbesondere mehrere Schlauch-Module nacheinander auf dem Handwagen angeordnet sein. Des Weiteren kann der Handwagen insbesondere eine Hebeeinrichtung, wie beispielsweise einen Flaschenzug, zum Hochheben und/oder Einsetzen von einem bereits aufgewickelten Schlauch und/oder einem Schlauchmodul mittels des Wickelkerns in beidseitige Aufnahmen am Handwagen aufweisen.

Ein "Schlauch" ist insbesondere ein flexibler länglicher Hohlkörper zum Befüllen mit Wasser oder einer anderen Flüssigkeit. Ein Schlauch kann insbesondere einen runden oder ovalen Querschnitt im gefüllten Zustand aufweisen. Ein Schlauch ist insbesondere ein Flachschlauch. Der Schlauch ist insbesondere als Bestandteil einer mobilen Hochwasserschutz- oder Deich-Anlage einsetzbar, wobei der Schlauch bevorzugt direkt mit dem Hochwasser oder dem am Deich vorliegenden Wasser gefüllt wird oder ist. Der gefüllte Schlauch stellt beispielsweise eine Stauhöhe in einem Bereich von 0,5 m bis 5,0 m gegenüber dem Hochwasser bereit. Der Schlauch weist insbesondere einen Durchmesser in einem Bereich von 0,5 bis 5,0 m auf. Der Schlauch kann beispielsweise eine Länge von 10 m bis 100 m aufweisen. Bei einem Schlauch kann es sich auch um ein Schlauchmodul handeln, bei dem ein Schlauch oder mehrere Schläuche umgeben von einem Netz und/oder verbunden mit einer Dichtungsplane ist oder sind und gemeinsam auf- und abgewickelt wird oder werden. Der gefüllte Schlauch und/oder das Schlauchmodul ersetzt insbesondere die üblicherweise im Hochwasserschutz oder Deichschutz eingesetzten gefüllten Sandsäcke. Prinzipiell kann es sich bei einem Schlauch um jegliche Art von länglichem Wickelgut handeln. Somit können anstelle eines Schlauches auch andere längliche Wickelgüter, wie Kabel, insbesondere Stromkabel oder Glasfaserkabel, mittels des Handwagens transportiert und/oder auf einen Wickelkern auf- und abgewickelt werden.

Unter "Wickeln" wird insbesondere ein Aufwickeln oder Abwickeln eines flexiblen länglichen Gegenstandes und/oder eines Schlauches für eine mobile Hochwasserschutz- oder Deichanlage verstanden. Unter "Aufwickeln" wird insbesondere ein um eine Achse und/oder den Wickelkern verlaufendes Aufrollen des Schlauches verstanden, sodass ein außerhalb des Handwagens zuvor ausgebrachter Schlauch wieder auf den Handwagen aufgenommen wird. Unter "Abwickeln" wird insbesondere das um eine Achse und/oder den Wickelkern verlaufende Abrollen eines Schlauches verstanden, sodass der Schlauch von dem Handwagen in die Umgebung ausgebracht wird. Beim Aufwickeln wird insbesondere der Handwagen in Richtung auf den ausgebrachten Schlauch bewegt, während beim Abwickeln der Handwagen von dem bereits ausgebrachten Schlauchabschnitt wegbewegt wird.

Ein "Wickelkern" ist insbesondere ein Gegenstand, auf welchem ein Wickelgut und/oder ein Schlauch und/oder Schlauchmodul aufgewickelt oder abgewickelt wird. Bei einem Wickelkern kann es sich insbesondere um einen im Wesentlichen zylindrischen Gegenstand handeln. Der Wickelkern kann als Rolle, massiver Zylinder und/oder Hohlzylinder ausgebildet sein. Bei einem Wickelkern kann es sich auch um eine Spule handeln. Bevorzugt weist der Wickelkern mehrere Rohre auf, welche im Querschnitt gleichmäßig beabstandet am Außendurchmesser einer Kreisfläche angeordnet und/oder verbunden sind. Der Wickelkern kann insbesondere Teil einer Aufwickelhilfe als Hilfsmittel zum Wickeln sein. Die Aufwickelhilfe kann neben dem Wickelkern insbesondere zusätzliche Begrenzungseinrichtungen aufweisen, um ein lagegenaues Wickeln des Schlauches zu unterstützen. Hierzu kann die Aufwickelhilfe endständig beidseitig der beiden Enden des Wickelkerns beispielsweise zwei scheibenförmige Begrenzungselemente, wie Haspelräder, aufweisen. Die Aufwickelhilfe kann insbesondere zwei Aufnahmen zum Aufnehmen der gegenüberliegenden Seite des drehbaren Wickelkerns aufweisen. Die Aufnahmen können jeweils mit dem Rahmengestell verbunden sein.

Ein "Rahmengestell" ist insbesondere ein tragendes Teil des Handwagens. Das Rahmengestell dient insbesondere zum Tragen einer Nutzlast und/oder des Schlauches und der Verbindung mindestens eines Rades und/oder Lenkrades. An dem Rahmengestell ist die Deichsel insbesondere schwenkbar, drehbar und/oder beweglich befestigt. Das Rahmengestell ist insbesondere feststehend. Das Rahmengestell weist insbesondere mindestens einen Querrahmen auf, wobei der Querrahmen insbesondere horizontal und somit parallel zum Boden und senkrecht zur Zugrichtung des Handwagens und/oder der Deichsel angeordnet ist. Bevorzugt weist das Rahmengestell neben dem Querrahmen weitere Rahmen auf. Beispielsweise kann an beiden gegenüberliegenden Enden des Querrahmens jeweils ein längsseitiger Rahmen ausgerichtet entgegen der Zugrichtung angeordnet sein. Unterhalb dieser Längsrahmen können endständig entgegen der Zugrichtung jeweils ein Rad angeordnet sein. Bevorzugt weist ein Rahmengestell gegenüberliegend zur Deichsel eine Öffnung zum Ausbringen und Einholen des Schlauches auf, sodass der Schlauch beim Abwickeln direkt zwischen den beiden längsseitigen Rahmen auf den Boden gelangt und beim Aufwickeln zwischen den beiden längsseitigen Rahmen wieder auf den Handwagen aufgenommen wird. Somit kann das Rahmengestell insbesondere eine U-Form, V-Form oder eine einseitig offene Rechteckform aufweisen. Das Rahmengestell und/oder die Aufwickelhilfe weist oder weisen mindestens eine Breite auf, welche der Breite des Schlauches entspricht. Das Rahmengestell weist insbesondere wie Metall, wie Stahl und/oder Aluminium auf.

Ein "Rad" ist insbesondere ein scheibenförmiger Gegenstand mit einer im Wesentlichen kreisförmigen Kontur, welcher um eine Achse, die senkrecht auf der idealisierten Kreisebene steht, drehbar gelagert ist. Das Rad ist insbesondere drehbar am Rahmengestell und/oder der Drehachse der Deichsel befestigt. Bei einem Rad kann es sich um ein Vorderrad, Hinterrad und/oder Lenkrad handeln. Das Rad weist insbesondere eine Bereifung, wie eine Gummibereifung, oder ein Vollmaterial auf. Bei einem Rad kann es sich jedoch auch um eine Rolle handeln. Somit kann beispielsweise anstelle von zwei sich gegenüberliegenden am Rahmengestell drehbar verbundenen Rädern auch mittig oder über die gesamte Breite des Rahmengestells eine Rolle angeordnet sein.

Eine "Deichsel" (auch "Lenkdeichsel" genannt) ist insbesondere eine Zug-, Schub- und/oder Lenkvorrichtung an dem Handwagen. Die Deichsel ist insbesondere am Rahmengestell und/oder Querrahmen des Rahmengestells drehbeweglich verbunden. Die Deichsel ist insbesondere ein länglicher Gegenstand. Bei der Deichsel kann es sich beispielsweise um eine Stange oder mehrere Stangen und/oder einen Rahmen handeln. Die Deichsel weist insbesondere endständig in Zugrichtung einen Handgriff auf. An der gegenüberliegenden Seite der Deichsel weist die Deichsel insbesondere eine Kippachse auf, welche beispielsweise in einem Haltearm gelagert ist. Der Haltearm kann wiederum an seiner Unterseite mit einer Drehachse verbunden sein, welche drehbar in dem Rahmengestell gelagert ist. Des Weiteren weist die Deichsel gegenüberliegend zum Handgriff ein Exzenterelement auf, welches um die Kippachse beweglich und mit dem Zugelement verbunden ist.

Eine "Kippachse" ist insbesondere eine horizontal ausgerichtete Achse, um welche sich die Deichsel beim vertikalen Kippen dreht. Hierbei ist die Deichsel um die Kippachse insbesondere zwischen einer Aufrechtstellung, bei welcher die Deichsel in ihrer Längsrichtung im Wesentlichen vertikal angeordnet ist, und einer Absenkstellung, bei welcher die Deichsel insbesondere waagerecht und/oder in einer Stellung von < 90° zwischen der abgesenkten Deichsel und der vertikalen Achse und/oder der Drehachse der Deichsel angeordnet ist, kippbar und/oder bewegbar.

Eine "vertikale Drehachse" ist insbesondere eine Rotationsachse und somit eine Gerade, welche bei einer Drehbewegung der Deichsel ortsfest bleibt. Die vertikale Drehachse ist in ihrer Längsrichtung insbesondere vertikal ausgerichtet. Die Deichsel wird um diese vertikale Drehachse relativ zur mittigen Ausrichtung der Deichsel beim Ziehen zum Lenken seitlich nach links oder rechts bewegt. Somit wird die Deichsel zum Lenken insbesondere um die vertikale Drehachse im Uhrzeigersinn oder gegen den Uhrzeigersinn bei Draufsicht auf die Drehachse gedreht.

Unter "das Zugelement drehbar im Wesentlichen in der Drehachse der Deichsel ist" wird insbesondere verstanden, dass das Zugelement nicht zwingend genau im Mittelpunkt der Drehachse der Deichsel angeordnet sein muss. Das Zugelement ist insbesondere in seiner Längsrichtung im Wesentlichen entlang der vertikalen Drehachse angeordnet ist. Da die vertikale Drehachse insbesondere durch eine Rotationsachse und somit eine Gerade, welche bei einer Drehbewegung der Deichsel ortsfest bleibt, charakterisiert ist, kann das Zugelement auch oberhalb oder unterhalb der physikalischen, gegenständlichen Drehachse als Maschinenelement angeordnet sein, liegt aber im Wesentlichen in und/oder entlang der fiktiven Rotationsachse und/oder ortsfesten Geraden. Somit kann das Zugelement auch in seiner Längsrichtung parallel zur Drehachse der Deichsel oder in einem schrägen Winkel, insbesondere in einem Winkel von < 45°, zur Drehachse der Deichsel angeordnet sein. Da beim Bremsvorgang sowohl beim Anziehen der Bremse als auch beim Lösen der Bremse sowohl die Deichsel und über das Exzenterelement das Zugelement auf- oder abbewegt und das Ansteuerhebelelement an seinem Ende verbunden mit dem Zugelement ebenfalls auf- oder abbewegt wird, finden diese Bewegungen in beiden Achsen nicht exakt auf einem jeweiligen Kreisbogen statt, wodurch die Lage des Zugelementes je nach der wirkenden Kraft zumindest geringfügig außermittig zur Drehachse der Deichsel ist.

Unter einem "Bremsgestänge" werden insbesondere verschiedene Übertragungselemente, wie beispielsweise Stangen, Rohre und/oder Gelenke, verstanden, welche eine Übertragung und/oder Übersetzung einer Bewegung zwischen der bremseinleitenden Kraft der Deichsel und der Bremseinheit bewirken. Das Bremsgestänge kann insbesondere eine Bremszugstange, einen Umlenkhebel und/oder ein Torsionsrohr aufweisen. Bei zwei seitlich sich gegenüberliegenden Rädern am Rahmengestell weist der Handwagen insbesondere zwei Bremsgestänge auf, welche bevorzugt beidseitig zwischen der jeweiligen Bremseinheit am jeweiligen Rad und dem Ansteuerhebelelement angeordnet sind. Das jeweilige Bremsgestänge dreht sich insbesondere im Betrieb nicht selbst.

Eine "Bremseinheit" ist insbesondere ein mechanisches Bremssystem, welches die Bewegung eines Rades oder mehrerer Räder des Handwagens verringert oder stoppt. Die Bremseinheit weist insbesondere ein kraftschlüssiges Kupplungselement, wie einen Bremsbelag, einen Bremsklotz oder eine Bremsbacke, auf, welches direkt auf die Außenoberfläche eines Rades einwirkt. Des Weiteren kann die Bremseinheit eine Bremsplatte, ein Gelenk oder mehrere Gelenke und/oder eine Gasdruckfeder aufweisen. Bevorzugt ist jedem Bremsgestänge mindestens eine Bremseinheit angeordnet an einem Rad zugeordnet.

Das "Ansteuerhebelelement" ist ein längliches Übertragungselement, welches beweglich am Rahmengestell angeordnet ist. Das Ansteuerhebelelement ist insbesondere mit dem ersten Bremsgestänge und/oder dem zweiten Bremsgestänge wirktechnisch verbunden. Das Ansteuerhebelelement ist insbesondere mit einem Torsionsrohr verbunden. Das Ansteuerhebelelement ist insbesondere mittels eines Torsionsrohrs des mindestens ersten Bremsgestänges beweglich an dem Rahmengestell angeordnet. Das Ansteuerhebelelement ist insbesondere im Bereich seines einen Endes zumindest partiell drehbar und/oder bewegbar am Bremsgestänge und/oder dem Torsionsrohr verbunden. Das gegenüberliegende freie Ende des Ansteuerhebelelementes ist insbesondere mit dem Zugelement verbunden. Das gegenüberliegende freie Ende des Ansteuerhebelelementes ist insbesondere auf- und/oder abbewegbar. Dadurch kann sich das Ansteuerhebelelement insbesondere mit seinem gegenüberliegenden mit dem Zugelement verbundenen Ende auf- und abbewegen.

Ein "Zugelement" ist insbesondere ein längliches Übertragungselement, welches an seinem einen Ende mit dem Ansteuerungshebelelement und an seinem anderen Ende mit dem Exzenterelement verbunden ist. Bei einem Zugelement kann es sich insbesondere um eine Stange, beispielsweise um eine Zugstange oder eine Gewindestange, handeln. Das Zugelement kann beispielsweise jedoch auch als Draht oder Drahtgeflecht ausgebildet sein. Je nach Ausbildung des Zugelementes ist dieses entsprechend mit einer geeigneten Verbindung, wie beispielsweise einer kraftschlüssigen und/oder stoffschlüssigen Verbindung, jeweils mit dem Exzenterelement und dem Ansteuerhebelelement verbunden.

Unter einem "Exzenterelement" wird insbesondere ein speziell geformtes Steuerungselement verstanden, dessen Mittelpunkt außerhalb der Kippachse liegt. Das Exzenterelement wandelt insbesondere eine rotatorische Drehbewegung und/oder Kippbewegung in eine translatorische Bewegung und/oder Längenbewegung um und umgekehrt. Neben einer Umsetzung von einer Dreh- und/oder Kippbewegung zu einer Längsbewegung kann mittels des Exzenterelementes auch eine Kraftverstärkung bewirkt werden. Das Exzenterelement ist insbesondere um die Kippachse beweglich. Das Exzenterelement kann insbesondere eine gebogene Form und/oder Bananenform aufweisen.

Das Ansteuerhebelelement, das Zugelement und das Exzenterelement bilden insbesondere ein Ansteuerungssystem aus, welches zwischen dem jeweiligen Bremsgestänge und der Deichsel angeordnet ist.

In einer weiteren Ausführungsform des Handwagens weist der Handwagen ein zweites Rad, eine zweite Bremseinheit und/oder ein zweites Bremsgestänge auf, wobei das zweite Bremsgestänge wirktechnisch mit dem Ansteuerhebelelement verbunden ist.

Somit können durch gezielte Betätigung der Deichsel über das Zugelement wirkend am Ansteuerhebelelement dann weiter ausgehend von dem Ansteuerhebelelement zwei getrennt geführte Bremsgestänge betätigt und somit zwei getrennt angeordnete Räder gebremst werden. Selbstverständlich können auch zwei Bremsgestänge und zwei Bremseinheiten zusammen auf ein selbes einziges Rad und/oder eine Rolle einwirken. Prinzipiell können das erste Rad und das zweite Rad, die erste Bremseinheit und die zweite Bremseinheit und das erste Bremsgestänge und das zweite Bremsgestänge jeweils identisch oder unterschiedlich zueinander ausgebildet sein.

Um eine optimale Kraftübertragung zum Anlegen und/oder Lösen der jeweiligen Bremseinheit an einem Rad bereitzustellen, weist oder weisen das erste Bremsgestänge und/oder das zweite Bremsgestänge eine Bremszugstange, einen Umlenkhebel und/oder ein Torsionsrohr auf.

Ein "Umlenkhebel" ist insbesondere ein Übertragungselement, mit welchem die Kraftwirkrichtung innerhalb des Bremsgestänges in eine andere Richtung umleitbar ist. Mittels des Umlenkhebels kann beispielsweise die Übertragung von einer Seite des Rahmengestells auf eine andere Seite des Rahmengestells erfolgen. Mittels des Umlenkhebels kann beispielsweise das Bremsgestänge von der Unterseite des Rahmengestells auf die Oberseite des Rahmengestells und/oder des Querrahmens umgelenkt werden. Der Umlenkhebel ist insbesondere in Richtung auf die Bremseinheit mit dem Bremsgestänge und an seinem anderen Ende mit dem Torsionsrohr verbunden. Der Umlenkhebel weist insbesondere eine gebogene Form, beispielsweise eine U-Form, auf. Der Umlenkhebel kann partiell das Rahmengestell und/oder den Querrahmen von außen umgreifen.

Ein "Torsionsrohr" ist insbesondere ein hohles Rohr, welches eine tordierende Beanspruchung, insbesondere eine Torsionsschubspannung, aufnimmt und zwischen dem Umlenkhebel und dem Ansteuerhebelelement überträgt. Das Torsionsrohr kann beispielsweise Stahl oder glasfaserverstärkten Kunststoff aufweisen. Das Torsionsrohr ist insbesondere an der Oberseite des Rahmengestells und/oder des Querrahmens angeordnet und/oder befestigt.

In einer weiteren Ausführungsform des Handwagens ist das Zugelement mittig in der vertikalen Drehachse angeordnet, sodass das Zugelement mit der Deichsel drehbar ist.

Dadurch wird eine optimale Ansteuerung des Ansteuerhebelelementes auch bei einer sich zum Lenken drehenden Deichsel und eine optimale Kraftübertragung bei der Bremsbetätigung der Deichsel durch Kippen von dem Exzenterelement auf das Zugelement und weiter an das Ansteuerhebelelement übertragen, sodass gleichzeitig ein gewünschtes Lenken der Deichsel und effizientes Einleiten eines Bremsvorgangs oder Lösen der Bremse ermöglicht ist.

Unter "mittig in der vertikalen Drehachse angeordnet" wird insbesondere verstanden, dass das Zugelement mittig und/oder zentriert zu einer fiktiven Rotationsachse und somit der Geraden, welche bei einer Drehbewegung der Deichsel ortsfest bleibt, und/oder zu der physikalischen, gegenständlichen Drehachse als Maschinenelement angeordnet ist. Somit kann das Zugelement mittig auch oberhalb oder unterhalb der physikalischen, gegenständlichen Drehachse als Maschinenelement angeordnet sein, liegt aber im Wesentlichen mittig in und/oder entlang der fiktiven Rotationsachse und/oder ortsfesten Geraden.

Um gleichzeitig ein störungsfreies Drehen des Zugelementes mit der sich drehenden Deichsel und eine Kraftübertragung mit einer im Wesentlichen linearen Bewegung des Zugelementes beim Ziehen oder Schieben mittels des Exzenterelementes zu ermöglichen, weist das Ansteuerhebelelement ein Axiallager zum Aufnehmen einer Drehbewegung des Zugelementes auf, sodass das Ansteuerhebelelement unabhängig von der Drehbewegung des Zugelementes auf- und abbewegbar ist.

Bei einem "Axiallager" handelt es sich insbesondere um ein Lager, welches eine Drehung des Zugelementes in seiner Umfangrichtung erlaubt. Bei einem Axiallager kann es sich insbesondere um ein Radiaxlager und somit ein Radial-AxialLager handeln, welches die Drehung des Zugelementes in Umfangrichtung erlaubt, jedoch mindestens in einer Richtung Axialkräfte aufnimmt. Das Axiallager nimmt insbesondere das untere Ende des Zugelementes auf und somit sowohl die Kräfte in radialer Richtung beim Drehen des Zugelementes als auch beidseitig in axialer Richtung beim Ziehen und Schieben des Zugelementes.

In einer weiteren Ausführungsform des Handwagens ist das Zugelement mittels einer ersten kardanischen Lagerung an dem Ansteuerhebelelement und/oder mittels einer zweiten kardanischen Lagerung an dem Exzenterelement aufgehängt, sodass eine Außermittigkeit ausgleichbar ist.

Somit wird eine Außermittigkeit des Zugelementes bei dessen Ziehen oder Schieben mittels einer kardanischen Aufhängung oder beiden kardanischen Aufhängungen weitgehend ausgeglichen. Dazu sind insbesondere die beiden gegenüberliegenden Enden des Zugelementes oder das Axiallager, welches das untere Ende des Zugelementes aufnimmt, entsprechend kardanisch aufgehängt. Hierbei werden insbesondere Außermittigkeiten durch das Exzenterelement und/oder die nicht exakten Bewegungen in der Kippachse und der Bewegungsachse des Ansteuerhebelelementes ausgeglichen.

Unter einer "kardanischen Lagerung" (auch "kardanische Aufhängung" genannt) wird insbesondere verstanden, dass ein jeweiliges Ende des Zugelementes in einem Gestell mithilfe von zwei sich schneidenden, zueinander rechtwinkligen Drehlagern aufgehängt ist.

Um ein schnelles Bremsen mit hoher Bremskraft zu und/oder ein Hochfedern der Deichsel in die Aufrechtstellung beim Loslassen der Deichsel zu realisieren, kann mindestens eine Gasdruckfeder an dem Rahmengestell und an der ersten Bremseinheit oder der zweiten Bremseinheit verbunden sein, sodass die jeweilige Bremseinheit mit einem definierten Anpressdruck an das jeweilige Rad anlegbar ist.

Zum einen wird mittels der Gasdruckfeder die Bremseinheit und/oder ein Bremsklotz gezielt gegen das jeweilige Rad geschoben. Zum anderen wird dadurch über das zugehörige Bremsgestänge, das Ansteuerhebelelement und weiter über das Zugelement und das Exzenterelement die Deichsel in die Aufrechtstellung gezogen und somit der Bremsvorgang unterstützt.

Unter einer "Gasdruckfeder" (auch "Gasfeder" genannt) wird insbesondere eine pneumatische Feder verstanden, welche unter Hochdruck stehendes Gas zur Bereitstellung einer Federkraft nutzt. Die Gasdruckfeder weist insbesondere einen Zylinder und einen darin beweglichen Kolben auf. Der Zylinder ist insbesondere als Druckrohr ausgebildet und mit einem komprimierten Gas gefüllt, wobei ein Teil des Druckkolbens aufgrund einer Kraft des komprimierten Gases in einer Ausschubrichtung über das Druckrohr hinaus beweglich ist und dadurch auf die Bremseinheit einwirken kann und mechanisch auch wieder in das Druckrohr zurückgeschoben werden kann.

In einer weiteren Ausführungsform des Handwagens weist die jeweilige Bremseinheit eine Bremsplatte auf, wobei die Bremsplatte beweglich gelagert und mit der jeweiligen Bremszugstange verbunden ist.

Mittels der Bremsplatte wird einerseits eine große Fläche für einen Bremsbelag und/oder Bremsklotz bereitgestellt, welche auf das Rad effektiv und wirksam mit einem kurzen Bremsweg einwirken kann. Da die Bremsplatte beweglich, beispielsweise mittels eines Gelenks an einer Seite der Bremsplatte, gelagert ist, wird ein sehr kurzer Bremsübertragungsweg, beispielsweise in einem Bereich von 1 mm bis 3 mm, realisiert. Dieser liegt deutlich unter den sehr langen Bremswegen in einem Bereich von 10 mm bei bekannten Bremssystemen für konventionelle Handwagen.

Um eine Bremsfläche der Bremseinheit mittig und mit einer großen Fläche auf die Bereifung des Rades einwirken zu lassen, weist die Bremseinheit einen Bremsklotz auf, wobei der Bremsklotz an der Bremsplatte zum Verteilen einer Bremskraft auf das jeweilige Rad gelenkig gelagert ist.

Somit kann der Bremsklotz mittels eines Gelenks beweglich an der Außenseite der Bremsplatte gelagert sein und wird dadurch mittig, flächig und immer radial auf die Bereifung des Rades gedrückt. Dadurch liegt der Bremsklotz stets optimal an dem zu bremsenden Rad an.

In einer weiteren Ausführungsform des Handwagens sind das erste Rad und das zweite Rad an dem Rahmengestell gegenüberliegend zur Deichsel angeordnet und/oder unterhalb der Deichsel und/oder an der Drehachse ist mindestens ein Lenkrad angeordnet.

Somit können das erste Rad und das zweite Rad, welche beispielsweise seitlich in Zugrichtung voneinander beabstandet am Rahmengestell gegenüberliegend zur Deichsel angeordnet sind, gezielt mittels der Kippung der Deichsel gebremst werden, während ein Lenkrad unterhalb der Deichsel gerade ungebremst frei von der Bremseinheit und dem Bremsgestänge ist und dadurch trotz Einleiten oder Lösen der Bremsung für den Benutzer lenkbar bleibt. Dadurch wird der entsprechende Bremsvorgang von den Bewegungen der Deichsel aufgrund von Ziehen, Schieben und/oder Lenken sowohl räumlich als auch funktional entkoppelt und ermöglicht dem Benutzer eine optimale und gezielte Handhabung des Handwagens und eine schnelle Reaktion sowohl bezüglich einer fortgesetzten Bewegung des Handwagens als auch dessen Bremsvorgänge.

Im Weiteren wird die Erfindung anhand eines Ausführungsbeispiels näher erläutert. Es zeigen
- Figur 1: eine stark schematische Draufsicht auf einen Handwagen,
- Figur 2: eine stark schematische Schnittdarstellung des Handwagens aus Figur 1 im Bremszustand in Seitenansicht,
- Figur 3: eine stark schematische Schnittdarstellung eines Ansteuersystems des Handwagens im Bremszustand in Seitenansicht,
- Figur 4: eine stark schematische Schnittdarstellung des Handwagens im Fahrzustand in Seitenansicht, und
- Figur 5: eine stark schematische Schnittdarstellung des Ansteuersystems des Handwagens im Fahrzustand in Seitenansicht.

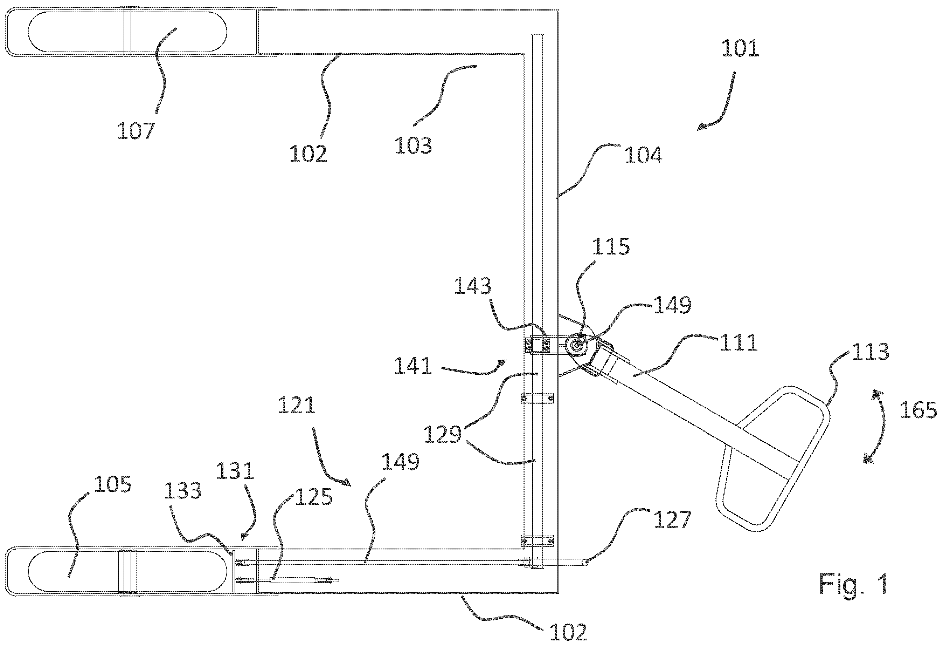

Ein Handwagen 101 zum Transport und Wickeln eines Schlauches einer mobilen Hochwasserschutzanlage weist ein Rahmengestell 103 mit einem Querrahmen 104 auf, wobei an den beiden gegenüberliegenden Enden des Querrahmens 104 jeweils zwei Längsrahmen 102 beabstandet zueinander angeordnet sind. Gegenüberliegend zum Querrahmen 104 sind an den Längsrahmen 102 ein erstes Rad 105 und ein zweites Rad 107 rollbar angeordnet. An dem Querrahmen 104 ist eine Deichsel 111 über eine Drehachse 115 drehbar in einer gegenläufigen Lenkrichtung 165 verbunden. Mit der Drehachse 115 ist ein Lenkrad 109 verbunden. Die Deichsel 111 weist am gegenüberliegenden Ende einen Handgriff 113 zum Lenken, Ziehen, Schieben und/oder Bremsen des Handwagens 101 auf (Figur 1).

Am gegenüberliegend zum Handgriff 113 angeordneten Ende der Deichsel 111 ist die Deichsel 111 mit einem Exzenterelement 151 verbunden. Hierbei ist die Deichsel 111 um eine Kippachse 155 zwischen einer Aufrechtstellung 161 und einer Absenkstellung 165 kippbar mittels eines Haltearms 159 verbunden, welcher an seine Unterseite auf einer Drehplatte 157 angeordnet ist, welche wiederum mit der Drehachse 115 verbunden ist. Das Exzenterelement 151 ist Teil eines Ansteuersystems 141, welches weiterhin eine Zugstange 149 und einen Ansteuerhebel 143 aufweist. Das Ansteuersystem 141 verbindet das innenliegende Ende der Deichsel 111 mit einem beidseitigen Bremsgestänge 121, welches entlang des Querrahmens 104 und jeweils der Längsrahmen 102 bis zu einer jeweiligen Bremseinheit 131 an dem ersten Rad 105 und dem zweiten Rad 107 geführt ist (in Figur 1 ist das rechte Bremsgestänge 121 im Detail gezeigt, ein nicht gezeigtes, zweites linkes Bremsgestänge 121 und eine zweite Bremseinheit 131 für das zweite Rad 107 sind äquivalent aufgebaut).

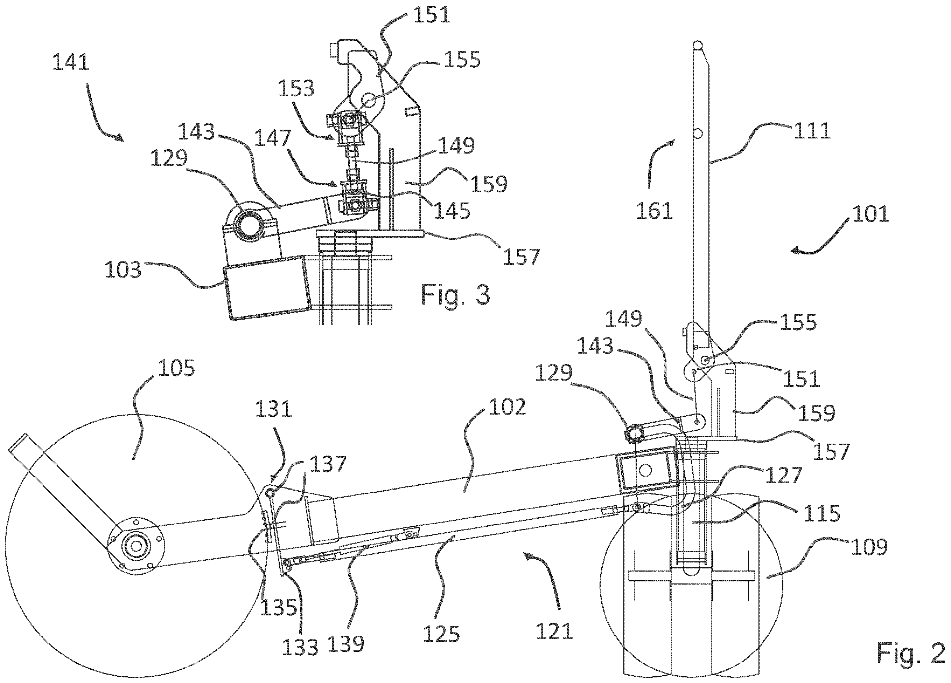

Das Bremsgestänge 121 weist auf eine Oberseite des Querrahmens 104 ein Torsionsrohr 129 auf, welches an dem Querrahmen 104 befestigt und mit dem Ansteuerhebel 143 verbunden ist, wobei der Ansteuerhebel 143 an seinem innenliegenden Ende beweglich um das Torsionsrohr 129 angeordnet ist. Am äußeren Übergang zwischen dem Querrahmen 104 und dem jeweiligen Längsrahmen 102 ist das jeweilige Ende des Torsionsrohrs 129 mit einem Umlenkhebel 127 verbunden, welcher umgebend die Oberseite, eine Vorderseite ausgerichtet zur Deichsel 111 und eine Unterseite des Querrahmens 104 beabstandet umgibt und im Bereich unterhalb des Querrahmens 104 mit einer Bremszugstange 125 verbunden ist. Das gegenüberliegende Ende der Bremszugstange 125 ist wiederum mit einer Bremsplatte 133 der Bremseinheit 131 verbunden. Des Weiteren weist die Bremseinheit 131 ein erstes Gelenk 137 zum beweglichen Lagern der Bremsplatte 133 auf. Ausgerichtet zum Rad 105 ist ein Bremsklotz 135 mit einem zweiten Gelenk 137 beweglich an der Bremsplatte 133 gelagert. Auf der Seite der Bremsplatte 133 ausgerichtet zur Deichsel 111 ist ein Ende einer Gasdruckfeder 139 verbunden, während das andere Ende der Gasdruckfeder 139 am Längsrahmen 102 befestigt ist (Figur 2).

Im Ansteuersystem 141 ist ein unteres Ende der Zugstange 149 drehbar in einem Axialkugellager 145 aufgenommen, welches mittels einer ersten kardanischen Aufhängung 147 an dem auf- und abbewegbaren Ende des Ansteuerhebels 143 befestigt ist. Das obere Ende der Zugstange 149 ist wiederum mittels einer zweiten kardanischen Aufhängung 153 an dem Exzenterelement 151 befestigt.

Des Weiteren weist der Handwagen 101 zwei senkrechte, in den Figuren nicht gezeigte, Träger mit Aufnahmen zum Aufnehmen eines Schlauchmoduls auf einem Wickelkern auf, wobei der Schlauch beim Ziehen am Handgriff 113 der Deichsel 111 zwischen dem offenen Ende des Rahmengestells 103 zwischen den gegenüberliegenden Längsrahmen 102 ausbringbar und beim Schieben in die entgegengesetzte Richtung wieder auf dem Wickelkern aufrollbar ist.

Mit dem Handwagen 101 werden zum Durchführen einer gezielten Bremsung und zum anschließenden Lösen der Bremseinheit 131 folgende Arbeitsgänge durchgeführt:

Zum Ausbringen des Schlauches zieht der Benutzer den Handwagen 101 am Handgriff 113 der Deichsel 111. Zum Bremsen des sich bewegenden Handwagens 101 drückt der Benutzer die Deichsel 111 an dem Handgriff 113 nach oben, sodass die Deichsel 111 vertikal ausgerichtet in der Aufrechtstellung 161 steht. Dadurch bewegt sich das Exzenterelement 151 um die Kippachse 155 von einer horizontalen Ausrichtung in seiner Längsrichtung ebenfalls in eine vertikale Ausrichtung (Figur 2 und 3). Damit drückt das untere Ende des Exzenterelementes 151 nach unten gegen das verbundene Zugelement 149, wodurch wiederum der am unteren Ende des Zugelements 149 verbundene Ansteuerhebel 143 nach unten gedrückt wird. Dies führt zur Entlastung des Torsionsrohrs 129, des verbundenen Umlenkhebels 127 und weiter der Bremszugstange 125, wodurch diese sich in Richtung zum Rad 105 bewegen und unterstützt von der Gasdruckfeder 139 die Bremsplatte 133 und somit den mittels der zweiten Gelenkes 137 angeordnete Bremsklotz 135 mittig auf eine Bereifung des ersten Rades 105 gedrückt wird. Hierbei wird durch die bewegliche Lagerung der Bremsplatte 133 endständig an dem ersten Gelenk 137 ein sehr kurzer Bremsweg von 1 mm realisiert, sodass der Handwagen 101 aufgrund der Aufrechtstellung 161 der Deichsel 111 sofort und mit ausreichender Bremskraft abgebremst wird.

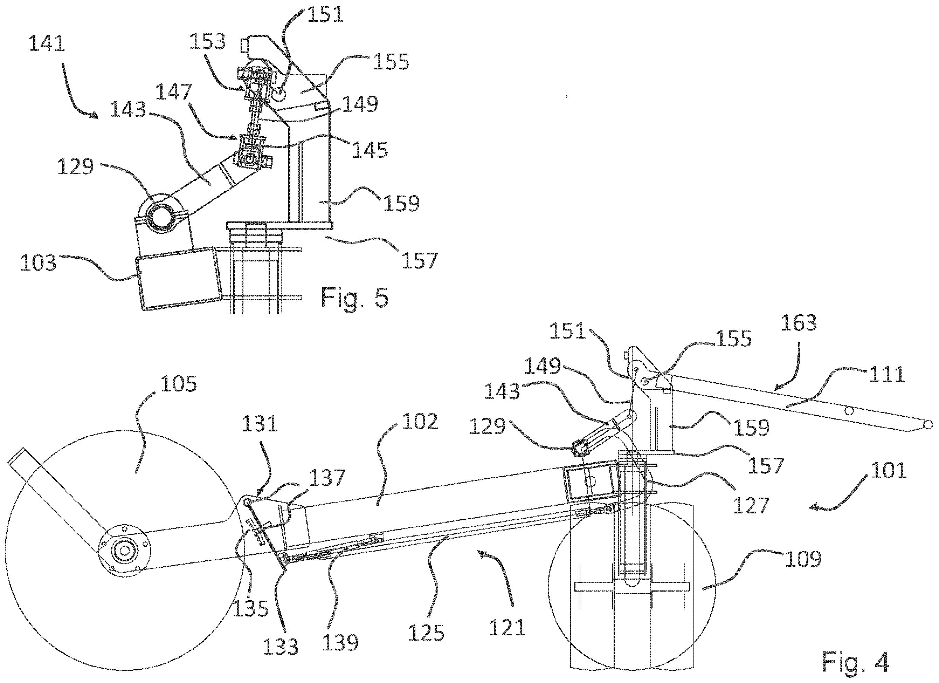

Um den Handwagen 101 anschließend weiter zu ziehen und die Bremseinheit 131 mit dem Bremsklotz 135 zu lösen, drückt der Benutzer am Handgriff 113 die Deichsel 111 nach unten in eine Absenkstellung 163 (Figur 4). Dadurch wird das Exzenterelement 155 um die Kippachse 155 wieder in eine annähernd horizontale Ausrichtung gebracht und zieht mit seinem oberen Ende an der Zugstange 149, wodurch wiederum der Ansteuerungshebel 143 nach oben gezogen wird. Dementsprechend werden das Torsionsrohr 129, der Umlenkhebel 127 und die Bremszugstange 125 zugbelastet und dadurch die am ersten Gelenk 137 beweglich gelagerte Bremsplatte 133 in Richtung zur Deichsel 111 gezogen, wodurch die Gasdruckfeder 139 komprimiert und der Bremsklotz 135 von der Bereifung des ersten Rades 105 beabstandet und folglich die Bremseinheit 131 gelöst wird, sodass der Handwagen 101 vom Benutzer weiter gezogen und der Schlauch weiter ausgebracht werden kann.

Somit wird ein Handwagen 101 mit einem Ansteuersystem 141, einem Bremsgestänge 121 und einer Bremseinheit 131 bereitgestellt, bei denen durch die Ausbildung der Deichsel 111 als Bremsbetätigungselement ein effizientes, benutzerfreundliches und schnelles Abbremsen an den nicht gelenkten Hinterrädern 105, 107 mit einem sehr kurzen Bremsweg ohne Einschränkung der Bewegungsfreiheit des Benutzers ermöglicht wird.

### Bezugszeichenliste

- 101: Handwagen
- 102: Längsrahmen
- 103: Rahmengestell
- 104: Querrahmen
- 105: erstes Rad
- 107: zweites Rad
- 109: Lenkrad
- 111: Deichsel
- 113: Handgriff
- 115: Drehachse
- 121: Bremsgestänge
- 125: Bremszugstange
- 127: Umlenkhebel
- 129: Torsionsrohr
- 131: Bremseinheit
- 133: Bremsplatte
- 135: Bremsklotz
- 137: Gelenk
- 139: Gasdruckfeder
- 141: Ansteuersystem
- 143: Ansteuerhebel
- 145: Axialkugellager
- 147: erste kardanische Aufhängung
- 149: Zugstange
- 151: Exzenterelement
- 153: zweite kardanische Aufhängung
- 155: Kippachse der Deichsel
- 157: Drehplatte
- 159: Haltearm
- 161: Aufrechtstellung
- 163: Absenkstellung
- 165: Lenkrichtung

## Patentansprüche

1. Handwagen (101) zum Transport und/oder Wickeln von mindestens einem Schlauch einer mobilen Hochwasserschutzanlage, wobei der Handwagen (101) ein Rahmengestell (103), mindestens ein erstes Rad (105, 107) rollbar verbunden an dem Rahmengestell (103), eine Deichsel (111) mit einer Kippachse (155) zum Kippen der zwischen einer Aufrechtstellung (161) und einer Absenkstellung (163) beweglichen Deichsel (111) und mit einem Handgriff (113) zum Ziehen, Schieben und/oder Lenken des Handwagens (103) und optional einen Wickelkern zum Wickeln des mindestens einen Schlauches aufweist, wobei die Deichsel (111) über eine vertikale Drehachse (115) drehbar mit dem Rahmengestell (103) verbunden ist, und mindestens eine Bremseinheit (131) an und/oder in dem Rahmengestell (103) angeordnet ist und mittels eines ersten Bremsgestänges (121) zum Ansteuern verbunden ist, **dadurch gekennzeichnet, dass** ein Ansteuerhebelelement (143) beweglich an dem Rahmengestell (103) angeordnet und mit dem ersten Bremsgestänge (121) wirktechnisch verbunden ist, wobei das Ansteuerhebelelement (143) mit einem Ende eines Zugelementes (149) verbunden ist und ein an der Deichsel (111) angeordnetes Exzenterelement (151) an einem gegenüberliegenden Ende des Zugelementes (149) verbunden ist, und das Zugelement (149) drehbar im Wesentlichen in der vertikalen Drehachse (115) der Deichsel (111) ist, sodass bei der Aufrechtstellung (161) der Deichsel (111) an der Kippachse (155) das Exzenterelement (151) nach unten gegen das Zugelement (149) drückt und das Ansteuerhebelelement (143) und das mindestens erste Bremsgestänge (121) entlastet und die Bremseinheit (131) an dem ersten Rad (105, 107) anliegt und bei der Absenkstellung (163) der Deichsel (111) an der Kippachse (155) das Exzenterelement (151) das Zugelement (149) und das Ansteuerhebelelement (143) nach oben zieht, das erste Bremsgestänge (121) gespannt und die Bremseinheit (131) vom ersten Rad (105, 107) getrennt ist.

2. Handwagen (101) nach Anspruch 1, **dadurch gekennzeichnet, dass** der Handwagen (101) ein zweites Rad (105, 107), eine zweite Bremseinheit (131) und/oder ein zweites Bremsgestänge aufweist, wobei das zweite Bremsgestänge wirktechnisch mit dem Ansteuerhebelelement (143) verbunden ist.

3. Handwagen (101) nach Anspruch 1 oder 2, **dadurch gekennzeichnet, dass** das erste Bremsgestänge (121) und/oder das zweite Bremsgestänge eine Bremszugstange (125), einen Umlenkhebel (127) und/oder ein Torsionsrohr (129), aufweist oder aufweisen.

4. Handwagen (101) nach einem der vorherigen Ansprüche, **dadurch gekennzeichnet, dass** das Zugelement (149) mittig in der vertikale Drehachse (115) angeordnet ist, sodass das Zugelement (149) mit der Deichsel (111) drehbar ist.

5. Handwagen (101) nach Anspruch 4, **dadurch gekennzeichnet, dass** das Ansteuerhebelelement (143) ein Axiallager (145) zum Aufnehmen einer Drehbewegung des Zugelementes (149) aufweist, sodass das Ansteuerhebelelement (143) unabhängig von der Drehbewegung des Zugelementes (149) auf- und abbewegbar ist.

6. Handwagen (101) nach einem der vorherigen Ansprüche, **dadurch gekennzeichnet, dass** das Zugelement (149) mittels einer ersten kardanischen Lagerung (147) an dem Ansteuerhebelelement (143) und/oder mittels einer zweiten kardanischen Lagerung (153) an dem Exzenterelement (151) aufgehängt ist, sodass eine Außermittigkeit ausgleichbar ist.

7. Handwagen (101) nach einem der vorherigen Ansprüche, **dadurch gekennzeichnet, dass** mindestens eine Gasdruckfeder (139) an dem Rahmengestell (103) und an der ersten Bremseinheit (131) oder der zweiten Bremseinheit (131) verbunden ist, sodass die jeweilige Bremseinheit (131) mit einem definierten Anpressdruck an das jeweilige Rad (105, 107) anlegbar ist.

8. Handwagen (101) nach einem der vorherigen Ansprüche, **dadurch gekennzeichnet, dass** die jeweilige Bremseinheit (131) eine Bremsplatte (133) aufweist, wobei die Bremsplatte (133) beweglich gelagert und mit der jeweiligen Bremszugstange (125) verbunden ist.

9. Handwagen (101) nach einem der vorherigen Ansprüche, **dadurch gekennzeichnet, dass** die Bremseinheit (131) einen Bremsklotz (135) aufweist, wobei der Bremsklotz (135) an der Bremsplatte (133) zum Verteilen einer Bremskraft auf das jeweilige Rad (105, 107) gelenkig gelagert ist.

10. Handwagen (101) nach einem der vorherigen Ansprüche, **dadurch gekennzeichnet, dass** das erste Rad (105) und das zweite Rad (105) an dem Rahmengestell (103) gegenüberliegend zur Deichsel (111) angeordnet sind und/oder unterhalb der Deichsel (111) und/oder an der Drehachse (115) mindestens ein Lenkrad (109) angeordnet ist.

## Claims

1. A handcart (101) for transporting and/or winding at least one hose of a mobile flood protection system, wherein the handcart (101) comprises a frame structure (103), at least one first wheel (105, 107) connected to the frame structure (103) so as to be able to roll, a drawbar (111) with a tilting axis (155) for tilting the drawbar (111), which is movable between an upright position (161) and a lowered position (163), and with a handle (113) for pulling, pushing and/or steering the handcart (103), and optionally a winding core for winding the at least one hose, wherein the drawbar (111) is rotatably connected to the frame structure (103) via a vertical axis of rotation (115), and at least one brake unit (131) is arranged on and/or in the frame structure (103) and is connected for actuation by means of a first brake linkage (121), **characterised in that** an actuating lever element (143) is movably arranged on the frame structure (103) and is operatively connected to the first brake linkage (121), wherein the actuating lever element (143) is connected to one end of a tension element (149) and an eccentric element (151) arranged on the drawbar (111) is connected to an opposite end of the tension element (149), and the tension element (149) is rotatable substantially on the vertical axis of rotation (115) of the drawbar (111), such that, in the upright position (161) of the drawbar (111) at the tilting axis (155), the eccentric element (151) presses downwards against the tension element (149) and unloads the actuating lever element (143) and at least the first brake linkage (121) and the brake unit (131) bears against the first wheel (105, 107) and, in the lowered position (163) of the drawbar (111) at the tilting axis (155), the eccentric element (151) pulls the tension element (149) and the actuating lever element (143) upwards, the first brake linkage (121) is tensioned and the brake unit (131) is separated from the first wheel (105, 107).

2. The handcart (101) according to claim 1, **characterised in that** the handcart (101) comprises a second wheel (105, 107), a second brake unit (131) and/or a second brake linkage, wherein the second brake linkage is operatively connected to the actuating lever element (143).

3. The handcart (101) according to claim 1 or 2, **characterised in that** the first brake linkage (121) and/or the second brake linkage comprises or comprise a brake pull rod (125), a deflecting lever (127) and/or a torsion tube (129).

4. The handcart (101) according to any one of the preceding claims, **characterised in that** the tension element (149) is arranged centrally on the vertical axis of rotation (115), such that the tension element (149) is rotatable with the drawbar (111).

5. The handcart (101) according to claim 4, **characterised in that** the actuating lever element (143) comprises a thrust bearing (145) for accommodating a rotational movement of the tension element (149), such that the actuating lever element (143) is movable up and down independently of the rotational movement of the tension element (149).

6. The handcart (101) according to any one of the preceding claims, **characterised in that** the tension element (149) is suspended by means of a first gimbal mounting (147) from the actuating lever element (143) and/or by means of a second gimbal mounting (153) from the eccentric element (151), such that an eccentricity can be compensated for.

7. The handcart (101) according to any one of the preceding claims, **characterised in that** at least one gas pressure spring (139) is connected to the frame structure (103) and to the first brake unit (131) or the second brake unit (131), such that the respective brake unit (131) can be brought to bear against the respective wheel (105, 107) with a defined contact pressure.

8. The handcart (101) according to any one of the preceding claims, **characterised in that** the respective brake unit (131) comprises a brake plate (133), wherein the brake plate (133) is movably mounted and connected to the respective brake pull rod (125).

9. The handcart (101) according to any one of the preceding claims, **characterised in that** the brake unit (131) comprises a brake block (135), wherein the brake block (135) is mounted in an articulated manner on the brake plate (133) for distributing a braking force to the respective wheel (105, 107).

10. The handcart (101) according to any one of the preceding claims, **characterised in that** the first wheel (105) and the second wheel (105) are arranged on the frame structure (103) opposite the drawbar (111) and/or at least one steerable wheel (109) is arranged below the drawbar (111) and/or at the axis of rotation (115).

## Revendications

1. Chariot à main (101) pour le transport et/ou l'enroulement d'au moins un tuyau d'une installation mobile de protection contre les inondations, dans lequel le chariot à main (101) comprend un châssis (103), au moins une première roue (105, 107) reliée au châssis (103) de manière à pouvoir rouler, un timon (111) avec un axe de basculement (155) pour le basculement du timon (111), mobile entre une position redressée (161) et une position abaissée (163), et avec une poignée (113) pour tirer, pousser et/ou diriger le chariot à main (103), et facultativement un noyau d'enroulement pour l'enroulement dudit au moins un tuyau, dans lequel le timon (111) est relié de manière rotative au châssis (103) par l'intermédiaire d'un axe de rotation vertical (115), et au moins une unité de freinage (131) est disposée sur et/ou dans le châssis (103) et est reliée pour la commande au moyen d'une première tringlerie de frein (121), **caractérisé en ce qu'**un élément de levier de commande (143) est disposé de manière mobile sur le châssis (103) et est relié fonctionnellement à la première tringlerie de frein (121), dans lequel l'élément de levier de commande (143) est relié à une extrémité d'un élément de traction (149) et un élément excentrique (151) disposé sur le timon (111) est relié à une extrémité opposée de l'élément de traction (149), et l'élément de traction (149) peut tourner sensiblement dans l'axe de rotation vertical (115) du timon (111), de sorte que, dans la position redressée (161) du timon (111) au niveau de l'axe de basculement (155), l'élément excentrique (151) pousse vers le bas contre l'élément de traction (149) et décharge l'élément de levier de commande (143) et au moins la première tringlerie de frein (121) et l'unité de freinage (131) est en appui contre la première roue (105, 107) et que, dans la position abaissée (163) du timon (111) au niveau de l'axe de basculement (155), l'élément excentrique (151) tire l'élément de traction (149) et l'élément de levier de commande (143) vers le haut, la première tringlerie de frein (121) est mise en tension et l'unité de freinage (131) est séparée de la première roue (105, 107).

2. Chariot à main (101) selon la revendication 1, **caractérisé en ce que** le chariot à main (101) comprend une deuxième roue (105, 107), une deuxième unité de freinage (131) et/ou une deuxième tringlerie de frein, la deuxième tringlerie de frein étant reliée fonctionnellement à l'élément de levier de commande (143).

3. Chariot à main (101) selon la revendication 1 ou 2, **caractérisé en ce que** la première tringlerie de frein (121) et/ou la deuxième tringlerie de frein comprend ou comprennent une tige de traction de frein (125), un levier de renvoi (127) et/ou un tube de torsion (129).

4. Chariot à main (101) selon l'une quelconque des revendications précédentes, **caractérisé en ce que** l'élément de traction (149) est disposé de manière centrée dans l'axe de rotation vertical (115), de sorte que l'élément de traction (149) peut tourner avec le timon (111).

5. Chariot à main (101) selon la revendication 4, **caractérisé en ce que** l'élément de levier de commande (143) comprend un palier axial (145) pour recevoir un mouvement de rotation de l'élément de traction (149), de sorte que l'élément de levier de commande (143) est mobile vers le haut et vers le bas indépendamment du mouvement de rotation de l'élément de traction (149).

6. Chariot à main (101) selon l'une quelconque des revendications précédentes, **caractérisé en ce que** l'élément de traction (149) est suspendu au moyen d'un premier montage à cardan (147) à l'élément de levier de commande (143) et/ou au moyen d'un deuxième montage à cardan (153) à l'élément excentrique (151), de sorte qu'une excentration peut être compensée.

7. Chariot à main (101) selon l'une quelconque des revendications précédentes, **caractérisé en ce qu'**au moins un ressort à gaz comprimé (139) est relié au châssis (103) et à la première unité de freinage (131) ou à la deuxième unité de freinage (131), de sorte que l'unité de freinage respective (131) peut être mise en appui contre la roue respective (105, 107) avec une pression de contact définie.

8. Chariot à main (101) selon l'une quelconque des revendications précédentes, **caractérisé en ce que** l'unité de freinage respective (131) comprend une plaque de frein (133), la plaque de frein (133) étant montée de manière mobile et reliée à la tige de traction de frein respective (125).

9. Chariot à main (101) selon l'une quelconque des revendications précédentes, **caractérisé en ce que** l'unité de freinage (131) comprend un patin de frein (135), le patin de frein (135) étant monté de manière articulée sur la plaque de frein (133) pour répartir une force de freinage sur la roue respective (105, 107).

10. Chariot à main (101) selon l'une quelconque des revendications précédentes, **caractérisé en ce que** la première roue (105) et la deuxième roue (105) sont disposées sur le châssis (103) à l'opposé du timon (111) et/ou au moins une roue directrice (109) est disposée au-dessous du timon (111) et/ou au niveau de l'axe de rotation (115).
